(19) Europäisches Patentamt
European Patent Office
Office européen des brevets

(11) **EP 3 166 020 A1**

(12) **EUROPEAN PATENT APPLICATION**

(43) Date of publication:
**10.05.2017 Bulletin 2017/19**

(51) Int Cl.:
***G06F 17/30*** (2006.01)

(21) Application number: **15306762.4**

(22) Date of filing: **06.11.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Thomson Licensing**
**92130 Issy-les-Moulineaux (FR)**

(72) Inventors:
• **LYU, Xinrui**
  **35576 Cesson-Sévigné (FR)**
• **ZEPEDA SALVATIERRA, Joaquin**
  **35576 Cesson-Sévigné (FR)**
• **PEREZ, Patrick**
  **35576 Cesson-Sévigné (FR)**

(74) Representative: **Huchet, Anne**
**TECHNICOLOR**
**1-5, rue Jeanne d'Arc**
**92130 Issy-les-Moulineaux (FR)**

(54) **METHOD AND APPARATUS FOR IMAGE CLASSIFICATION BASED ON DICTIONARY LEARNING**

(57)    An efficient technique for multimedia content classification is provided which generates sparse classifiers based on sparse coding and dictionary learning. Learning may be performed on the entire training set of multimedia content or jointly on classes of the training set. Methods (300, 400), apparatuses (500), computer-readable storage mediums and non-transitory computer-readable program products are provided for generating a sparse classifier for multimedia content classification (300, 500) and for multimedia content classification utilizing the sparse classifier (400, 500).

Figure 4

**Description**

TECHNICAL FIELD

The present disclosure relates to image classification and dictionary learning.

BACKGROUND

In the era of Big Data, image classification systems have become an area of increased interest, with application in many real world scenarios. When an image is provided as an input to an image classification system, the task of the system is to identify the visual concept present in the image. For example, in landscape assessment or planning, one needs to classify landscape images into classes such as forest, water or agriculture. Since the number of landscape images in a database might be very large, it becomes difficult for a user to mine the required relevant images manually from a database for assessment. In such cases, it is desirable to have an automated image classification system which can perform the task of retrieving the relevant images based on the user query. Similar applications are the identification of forest fires or analysis of images from other planets to identify geographical points of interest. In supermarket and grocery store applications, where a supermarket assistant is serving the customers for pricing an items list, an image classification system can be used to identify the items automatically based on the visual content of an image and then price them accordingly.

In traffic assessment and planning, one can estimate the density of traffic using images from cameras mounted on lamp posts near the road side. In this scenario images containing a large number of vehicles can be visually differentiated from images containing a smaller number of vehicles. The image classification system can be trained to identify the vehicular density based on visual content in an image. This information can be used by a Global Positioning System (GPS) to suggest an optimal route for the user. One more application can be found in the retrieval of relevant images from large collections of private photos stored in a personal computer (*e.g.*, as in the social network Google Plus). When users enable the option of synchronizing their Google Plus account with private albums in their personal computer, they can automatically retrieve relevant photos based on their respective queries. For example, if a user is interested in viewing the images containing "family" photos from his private collections, image classification can be used to perform such task by just taking the user query in text form ("family") and retrieving the relevant images of "family" photos from the private collections.

Other applications include object recognition (face, fingerprint, eye or iris, document, text, etc.), computer graphics, online image search tools, artificial intelligence and robotics, where a machine must search and recognize countless objects in order to perform a task or to navigate, etc.

The classical image feature extraction pipeline consists of three major steps including extracting local descriptors such as Scale-Invariant Feature Transform (SIFT) descriptors from the image, mapping these descriptors to a higher dimensional space, and sum or max-pooling the resulting vectors to form a fixed-dimensional image feature representation or feature vector. Examples of methods corresponding to this classical approach include Bag-of-Words (BoW), Fisher Vector (FV), Locality-Constrained Linear Encoding, Kernel codebooks, Super-Vector Encoding and Vector of Aggregated Local Descriptors (VLAD). These types of image feature extraction schemes are referred to as aggregators given that they aggregate local descriptors into a fixed dimensional representation. Generally, these approaches require computationally inexpensive unsupervised models of the local descriptor distribution, and the resulting image features (or feature vectors) can be used to learn (or train) likewise inexpensive linear classifiers using Support Vector Machine (SVM).

These techniques were initially developed for image content but extend beyond image indexing, search and classification to the more general problem of approximate nearest neighbor search in database of numerical vectors of high dimensionality representing multimedia content (*e.g.*, image, audio, video, text, etc. or a combination). Hence, in the following description, references to images and image indexing, search and classification also apply to multimedia content in general. For example, time series analysis can imply matching sub-sequences to a motif (descriptors) database to find the closest known motif when presented a sub-sequence of time series. In this case, high dimensionality vectors are also encountered, since a measurement every 30 seconds over 1 hour leads to a vector of 120 floats.

A traditional approach of nearest neighbor search consists in organizing the descriptors in a spatial structure (*e.g.*, KD-tree) that allows dividing the space into cells and to search a subset of the cells for the closest descriptors. However, since the feature vectors have a high dimension, the efficiency of such structure is reduced due to a problem known as "the curse of dimensionality", forcing it to explore a significant part of the space. Intuitively, if the query vector belongs to a cell c, its closest neighbor may also be in any neighboring cell of c. As the dimension increases, the number of neighboring cells increases exponentially. As a consequence, the ability to prune the search space is reduced, forcing the traditional approach to explore the "whole" space. This is problematic since computing the distance to each other descriptor is costly, and the base may not fit the main memory (RAM) requiring costly I/O with disks or Solid State Drives (SSD). Therefore, reducing the dimensionality of feature vectors or the complexity of the operations associated with image search and classification has become an area of technological interest.

In recent years, sparse coding has risen to prominence in a variety of problems in computer vision and image analysis, including image denoising, restoration and compression. Sparse coding approximates an input signal $y$ by a sparse linear combination of items (or atoms) from an over-complete dictionary matrix $D$ of dimension d x A. The dictionary matrix $D$ is a set of normalized "basis vectors" which is said to be adapted to $y$ if it can represent it with a few basis vectors, *i.e.,* there exists a sparse vector $x$ (also called sparse code) of dimension A x 1 such that $y = Dx$. As a result, computational savings are possible, including storage and processing time, since signals are represented with fewer components. Dictionary Learning (DL) methods are originally designed to learn or train a dictionary which can faithfully represent signals, therefore, they do not work well for classification tasks. To circumvent the problem, researchers recently developed several approaches to learn a classification oriented dictionary. In one such approach - described in "Learning a Discriminative Dictionary for Sparse Coding via Label Consistent K-SVD", by Z. Jiang et al., presented in the IEEE Conference on Computer Vision and Pattern Recognition, Colorado Springs, CO, 2011, sparse coding is applied to the feature vectors of the images used in the classification (*i.e., $y = Dx$*, where x is an image feature vector) and a concurrent minimization is performed for the sparse code and the classification objective function under a sparsity constraint on the trained feature vectors. The classification objective function in the approach includes a classifier loss function and a regularizer on the classifier $w$, and is dependent on the discriminative function $f(x, w)$ and the classifier vector $w$. However, this approach and similar variations imply a fairly large minimization over several parameters, and some appear to require learning relatively large dictionaries to achieve good classification performance, leading to high computational cost.

It is, therefore, of interest to propose efficient multimedia content (e.g., image) classification systems which provide a sparse solution. The present disclosure is directed towards such a system.

SUMMARY

The present disclosure provides an efficient multimedia content classification system by training a sparse classifier based on dictionary learning.

According to one aspect of the present disclosure, a method of generating a sparse classifier for classifying multimedia content is provided, the method including accessing a plurality of multimedia content feature vectors for a plurality of multimedia content items, generating a sparse classifier by training classifier weights with the multimedia content feature vectors, the classifier weights being a function of a dictionary matrix and sparse weights, and providing the trained classifier weights, including a trained dictionary matrix and trained sparse weights, as the sparse classifier.

According to one aspect of the present disclosure, an apparatus for generating a sparse classifier for classifying multimedia content is provided, the apparatus including a processor in communication with at least one input/output interface and at least one memory in communication with the processor, the processor being configured to perform any of the embodiments of the method of generating a sparse classifier.

According to one aspect of the present disclosure, a method of multimedia content classification is provided, the method including accessing a feature vector for a multimedia content item, accessing a sparse classifier generated according to the any of the embodiments of the method of generating a sparse classifier, and classifying the feature vector according to the sparse classifier to obtain the multimedia content classification.

According to one aspect of the present disclosure, an apparatus for multimedia content classification is provided, the apparatus including a processor in communication with at least one input/output interface, and at least one memory in communication with the processor, the processor being configured to perform any of embodiments of the method of multimedia content classification.

Additional features and advantages of the present disclosure will be made apparent from the following detailed description of illustrative embodiments which proceeds with reference to the accompanying figures.

BRIEF DESCRIPTION OF THE DRAWINGS

The present disclosure may be better understood in accordance with the following exemplary figures briefly described below:

Figure 1 illustrates system models of image search methods;
Figure 2 illustrates a simplified block diagram of a standard image classification system;
Figure 3 illustrates a flowchart of a method of generating a sparse classifier for classifying multimedia content according to the present disclosure;
Figure 4 illustrates a flowchart of a method of multimedia content classification according to the present disclosure; and

Figure 5 illustrates a block diagram of a computing environment within which the present disclosure may be implemented and executed.

DETAILED DISCUSSION OF THE EMBODIMENTS

The present disclosure provides an efficient multimedia classification system by training a sparse classifier based on dictionary learning.

Other than the inventive concept, several elements hereby discussed are well known and will not be described in detail. For example, other than the inventive concept, familiarity with indexing, search and classification systems and related techniques, including SIFT, BoW, FV, VLAD, SVM, KD-tree, Google Image Search (GIS), Convolutional Neural Network (CNN), K-Means, Gaussian Model Mixture (GMM), SVM and inverted file structure is assumed and not described herein in detail. In addition, familiarity with sparse coding and dictionary learning is assumed and not described herein in detail. It should also be noted that the inventive concept may be implemented using conventional programming techniques, which, as such, will not be described herein.

The prevailing image search method employed by image search engines such as Google Image Search (GIS) is metadata-based. When one uses GIS to search for images using a keyword, the images that the search engine returns are the ones whose Hypertext Markup Language (HTML) context is a textual match to the query keywords. This HTML context is in effect exploited as an implicit, hand-generated annotation of the image, and as such, is laborious to produce. Other implicit image metadata that can be exploited at search time includes the image size, format, color, date when created, etc. Indeed, images on the internet usually are uploaded with some sort of annotation or description so that users are able to retrieve the desired images efficiently.

Besides metadata-based search, another common image search method allows users to search based on a query image as opposed to keywords. This approach works by first computing similarities between the query image and each database image (*e.g.*, the searching pool may be narrowed down to images that have similar color or size to that of the query images, which would be much smaller in comparison with all the images on the internet), and then ranking these images by their similarities to the query image(*e.g.*, the larger the similarity, the higher the rank). Finally, the resulting images, as well as the associated content, are displayed in a rank-descending fashion.

Nevertheless, the two above-discussed search methods cannot address an important use case wherein one wishes to search inside unannotated content using keywords. When it comes to searching for images in one's personal image gallery, for example, one could first go through the laborious process of annotating or renaming the images by hand to find a certain class of images quickly using some keywords. For instance, a photographer who wants to search in his computer for all the photos he has taken of cats will not succeed in retrieving images that he has not previously labelled with the tag "cat". Yet image search methods exist that address exactly this important use case, enabling a user to search inside an unannotated database using a textual query. These methods rely on classifiers such as the Support Vector Machines (SVMs), which are learned (or trained) from a set of images representing the semantic concept being searched, which implies a number of classes of images, with each class representing one semantic concept. Yet SVMs require large amounts of data in order to produce trustworthy or reliable classifiers. The lack of data is often compensated using regularization techniques that force the learned classifier to correspond to a particular model (e.g., vectors with small $\ell_p$ norm), yet these models are unrelated to the classification task addressed.

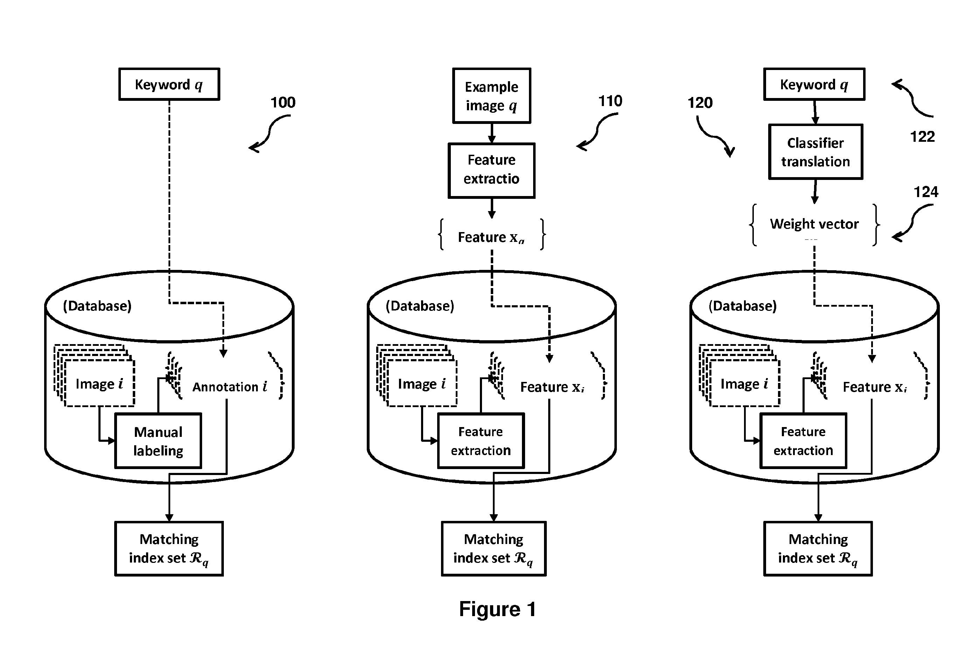

Figure 1 illustrates the three system models described above: the metadata-based image search method 100 (on the left), querying by example method 110 (in the middle) and semantic search method 120 (on the right). As shown in Figure 1, in order to search the database for the images that contain the semantic content indicated by the keywords, the semantic search method translates keywords 122 to corresponding classifiers 124.

The present disclosure describes a new regularization method that is built to encode the semantic understanding derived from a wide number of classes when learning a new model. More specifically, the regularization method of the present disclosure consists of forcing the learned or trained classifier to exist in a union of subspaces. This in turn corresponds to classifiers that are sparse in an over-complete set of vectors comprising the columns of a dictionary matrix ***D***. A subset of a Banach space, sometimes called a "system", is complete if every element in the space can be approximated arbitrarily well in norm by finite linear combinations of elements in the system. Such a complete system is over-complete if removal of an element of the subset from the system still results in a complete system.

The present disclosure also describes learning the dictionary matrix on a large class of images so that it indeed succeeds in sparsifying classifiers for semantic concepts of the underlying modality. As previously mentioned, the semantic search method translates keywords to corresponding classifiers. For each keyword (or class), a classifier is trained. There are several effective classification techniques, such as K-means, GMM, CNN and SVM. Linear SVMs are commonly used in practice since they can achieve excellent classification performance with simple implementation and fewer hyper-parameters to tune during training. Hence, without loss of generality, linear SVMs are adopted in the following disclosure. However, the concept can be extended to other classification techniques.

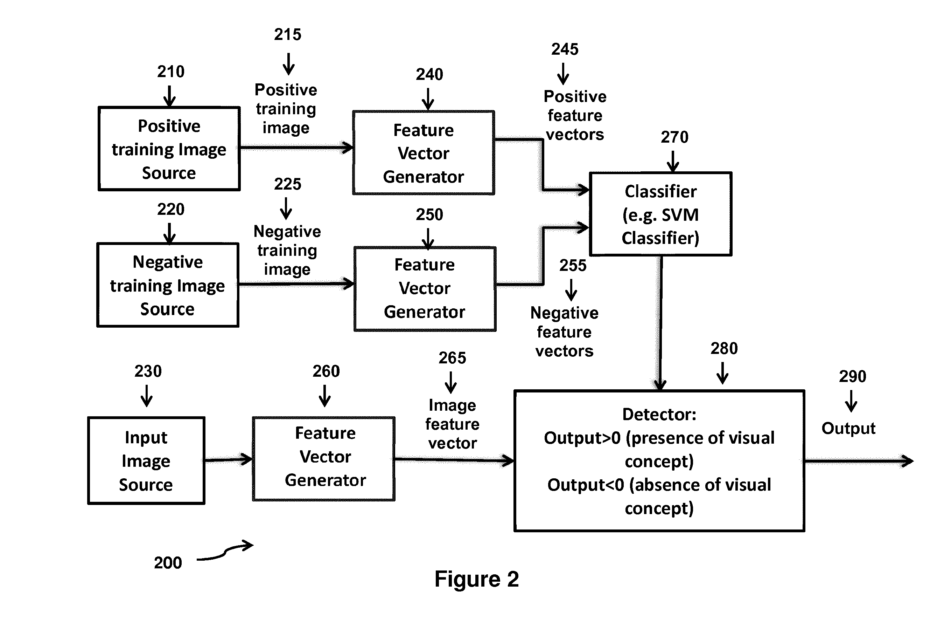

Figure 2 illustrates a simplified block diagram 200 of the basic pipeline for image classification. The image classification system attempts to detect whether a specific visual concept is present in an image, for example, whether the image contains a car, bus, person, bottle or motorbike. In the diagram, the detection of a visual concept in an image is done by the classifier 270 at a detector 280, but the classifier has to be trained to perform the task of detecting a specific visual concept.

Consider the example of classifying input images from an input image source 230 containing (or not) the visual concept "cat". In order to train the classifier for the visual concept "cat", a set of images (the positive training images 215 from a positive training image source 210) containing a cat and a set of images (the negative training images 225 from a negative training image source 220) not containing a cat are used. Each image is represented by a single feature vector (245, 255, 265) created by feature vector generators (240, 250 and 260). The classifier 270 (*e.g.*, Support vector machine - SVM) is learned or trained using the feature vectors for the positive and negative images (245 and 255, respectively). The images are then classified according to the trained classifiers at the detector 280. For the example of a "cat", the SVM classifier output 290 is positive if the new unseen image is deemed to contain a cat or negative otherwise.

When training the classifier for a certain class of images, one denotes image features that belong to the class as positive samples, giving them a label $y = 1$. The rest of the image features are denoted as negative samples and given a label $y = -1$. Classification consists of finding a discrimination function that can best separate samples labeled as $y = 1$ with those labeled as $y = -1$.

The discrimination or discriminative function for linear SVMs has a simple form, as shown in (1). The classifier weight vector $\boldsymbol{w}$ specifies the position of a hyperplane in the feature space that separates two classes or one class from the rest. The discriminative function $f(x)$ should satisfy the condition where $f(\boldsymbol{x}_i) > 0$ if $\boldsymbol{x}_i$ is a positive sample and $f(\boldsymbol{x}_i) < 0$ if $\boldsymbol{x}_i$ is a negative sample and is as follows:

$$f(\boldsymbol{x}_i) = \boldsymbol{w}^T \boldsymbol{x}_i + b \quad (1)$$

where $\boldsymbol{x}_i$ is the feature vector for image *i*, w is the classifier vector and *b* is a scalar.

The objective function J(w) for finding the optimal w is described by:

$$J(\boldsymbol{w}) = \frac{1}{M} \sum_{i=1}^{M} \ell(\boldsymbol{w}, \boldsymbol{x}_i, y_i) + \frac{\lambda}{2} \parallel \boldsymbol{w} \parallel_2^2 \quad (2)$$

where M is the number of images in the training dataset, $y_i$ are labels, $\ell(.)$ is a classifier loss function and $\lambda$ is a regularization parameter.

The first term on the right-hand side of (2) indicates the loss (also referred to as classification error) and the second term relates to the margin of the classification hyperplane (the regularization term). Commonly used loss functions are: logistic loss, hinge loss, simple quadratic loss, etc. The hinge loss is given by: $\ell(\boldsymbol{w}, x, y) = \max(0, 1 - y\boldsymbol{w}^T\boldsymbol{x})$.

Let w denote the optimal classifier of (2) as:

$$\hat{\boldsymbol{w}} = \arg\min_{\boldsymbol{w}} J(\boldsymbol{w}) \quad (3)$$

Once a classifier for a given class has been trained, it can be applied to a given image set. Moreover, the classifier can be stored in a lookup table to avoid having to compute it in the future. Having an efficient representation of a classifier, as in the present disclosure, is hence important, especially when the number of classes and/or the dimension of the feature vector are large.

When searching for images of the query classes among the database with the corresponding classifiers, the computation is as shown in (4). The discriminative function is computed with respect to all the image feature vectors in the database. Those with a positive discriminative function output are deemed by the system to correspond to the semantic concept being searched. The discriminative function is as follows:

$$f(X) = (f(\boldsymbol{x}_1), f(\boldsymbol{x}_2), \cdots, f(\boldsymbol{x}_N)) = \boldsymbol{w}_q^T[\boldsymbol{x}_1, \boldsymbol{x}_2, \cdots, \boldsymbol{x}_N] = \boldsymbol{w}_q^T X \quad (4)$$

The computation cost of semantic image search mainly comes from the computation of inner products, which linearly depend on both image feature vector dimension and the number of image features in the database. The computation cost of image semantic search in a database consisting of *N* image feature vectors of dimension *d* is $O(d \cdot N)$.

As previously mentioned, the storage of the classifier weight vectors for different classifiers and the computational cost during searching influence the efficiency of image semantic searches. Therefore, according to the present disclosure, sparse coding is employed in the classification method to encode the classifier weight vector into sparse representations for two main purposes. One purpose is to reduce the storage size for storing all classifiers for different classes and the other purpose is to reduce the computational cost of searching.

As already mentioned, sparse coding is an important technique used in image reconstruction and image compression. The basic principle is that one builds a large over-complete dictionary, which is a matrix whose columns are called atoms, where atoms are the basic elements of the feature space of the images in question. With this dictionary, one can represent a feature vector with a linear combination of just a few atoms from the dictionary. This linear combination of a subset of atoms from the dictionary can be represented using a sparse vector.

As shown in (1), the computation cost of linear SVM classification mainly comes from the computation of an inner product of two vectors. In reality, the feature vector $x_i$ that is used to describe an image is usually of high dimension. According to the present disclosure, by representing the classifier weight vector w as a sparse weight vector z that contains only few non-zero elements through sparse coding as in (5), it is possible to turn the heavy computation of inner products to simple summation of a few row vectors. The classifier weight vector is described by:

$$w = Dz \qquad (5)$$

where D is a dictionary matrix for sparse representation of the classifier.

It is worth pointing out that the approach of the present disclosure provides a sparse representation of the classifier, as opposed to the prior art approach that computes sparse representations of the feature vectors.

The objective function for finding the optimal sparse representation of the classifier weight vector is given by:

$$e(\boldsymbol{D}, \boldsymbol{z}) = \frac{1}{K}\sum_{k=1}^{K}( \parallel \boldsymbol{w}_k - \boldsymbol{D}\boldsymbol{z}_k \parallel_2^2 + \frac{\lambda}{2} \parallel \boldsymbol{z}_k \parallel_0) \quad (6)$$

Since the $\ell_0$ norm is not derivable and an optimization constraint with the $\ell_0$ norm is equivalent to that with the $\ell_1$ norm, the objective function that is actually used during implementation is given as follows:

$$e(\boldsymbol{D}, \boldsymbol{z}) = \frac{1}{K}\sum_{k=1}^{K}( \parallel \boldsymbol{w}_k - \boldsymbol{D}\boldsymbol{z}_k \parallel_2^2 + \frac{\lambda}{2} \parallel \boldsymbol{z}_k \parallel_1) \qquad (7)$$

When the image database contains millions of image features, it will still be inefficient to compute the inner product between the classifier weight vector and all the images in the database (represented by their feature vectors). A good structure that can be used to store image features is an inverted file. Inverted files for image search operate by taking each image features to a list associated to the closest centroid so that one just needs to search among several subsets of images rather than the entire database for the desired images, thus speeding up the search process.

Even though image features have been divided into subsets, one needs to know which subsets to search in. As mentioned before, classification using linear SVMs computes the inner product between the classifier weight vector and the feature vectors. In fact, one can turn the computation of the inner product into the computation of the Euclidean distance between the feature vectors and classifier weight vector, as shown below:

$$f(x; w) = \parallel w \parallel^2 + \parallel x \parallel^2 - \parallel w - x \parallel^2 / 2 \qquad (8)$$

Given the same w, the x's that result in the highest $f(x; w)$ are the top search results. Only the second and the third term in (8) influence the sorting of the results. Therefore, the best subset within which to search is $S_i$ where:

$$\hat{\imath} = \arg\max_i( \parallel c_i \parallel^2 - \parallel w - c_i \parallel^2) \qquad (9)$$

If more bits are used to store the index, there will be more centroids and the database will be separated into smaller subsets, which leads to faster searching. Hence, there exists a tradeoff between the memory usage and the searching speed.

The present disclosure describes learning linear classifiers that have the form:

$$w = Dz \quad (10)$$

where $D \in \mathbb{R}^{d \times A}$, is called the dictionary matrix, and $z \in \mathbb{R}^A$ is a sparse weight vector, that is, it has several entries that are zero.

In order to obtain sparse solutions, it is common in sparse coding to use over-complete dictionaries with A > d. But over-completeness indeed depends on the intrinsic dimensionality of the problem, and hence the number of atoms A is chosen using cross-validation experiments.

In the present disclosure, the initial focus is on learning sparse linear classifiers of the form in (10) while assuming that the dictionary $D$ is made available. Various approaches to learn such a classifier are described in the present disclosure.

In one embodiment of the present disclosure, given the dictionary $D$, learning a linear classifier that satisfies (10) amounts to learning the sparse vector $z$. A suitable formulation for $z$ can be derived by substituting (10) into the original SVM learning objective function in (2) and appending an additive sparsity-enforcing penalty or sparsity constraint term $\beta \| z \|_1$. Hence, from (2) and (3), the optimal sparse vector is as follows:

$$\underset{z}{\mathrm{argmin}} \frac{1}{M} \sum_{i=1}^{M} \left( \ell(z, x_i, y_i) + \frac{\alpha}{2} \| Dz \|_2^2 + \beta \| z \|_1 \right) \quad (11a)$$

where M is the number of images in the training dataset, $y_i$ are labels, $\ell(.)$ is a classifier loss function, $\alpha$ is a regularization parameter for the $\ell_2$ norm regularization term on the classifier weight, $\beta$ is a regularization parameter for the $\ell_1$ norm regularization term on the sparse weight vector and the function under minimization is the objective function $J(w) =$

$\frac{1}{M} \sum_{i=1}^{M} \left( \ell(z, x_i, y_i) + \frac{\alpha}{2} \| Dz \|_2^2 + \beta \| z \|_1 \right).$

An alternative to the $\ell_1$ norm regularization on the sparse weight vector may be a direct $\ell_0$ norm constraint on the individual sparse weights, *e.g.,* $|z_j| < \delta$, for $1 \leq j \leq A$, where $z = [z_1, z_2, ..., z_A]^T$ is the sparse weight vector and $\delta$ is a scalar.

The initial value of the sparse weight vector $z$ in (11a) can be randomly generated. In addition, the dictionary matrix $D$ can also be randomly generated. Other possibilities for obtaining $D$ may include using data vectors $x_i$ as columns of $D$, or learned classifiers as columns of $D$ (*e.g.,* $\ell_2$-SVM classifier). An $\ell_2$-SVM classifier is learned according to (3), where the $\ell_2$ qualifier refers to the regularization square term. Multiple such classifiers (the $w$ vectors) can be separately learned and used as columns of the matrix $D$. Other linear classifiers can also be used (*e.g.,* $\ell_1$-SVM classifier).

The dictionary matrix required in (11a) may be crucial if one is to obtain classifiers that simultaneously perform well and have a sufficiently sparse representation in $D$. Hence, in another embodiment of the present disclosure, the dictionary matrix $D$ is initially generated as before and the minimization is performed on both $D$ and the sparse weight vector z, as follows:

$$\underset{D,z}{\mathrm{argmin}} \frac{1}{M} \sum_{i=1}^{M} \left( \ell(z, x_i, y_i) + \frac{\alpha}{2} \| Dz \|_2^2 + \beta \| z \|_1 \right) (11b)$$

where $D$ and $z$ are initialized as described for (11a).

The end result of equations (11) is that the learned linear classifiers $Dz$ will exist in a union of subspaces, with each subspace being the span of a small subset of columns from $D$. Hence, the described classifier of the present disclosure is hereby referred to as a Union-of-Subspaces SVM (US-SVM).

Concerning the rank of each subspace (equivalent, under mild assumptions, to the number of columns spanning the subspace), it will vary between subspaces. The rank of a subspace is the minimum number of columns that spans it. This is equivalent to the number of columns from $D$ that define the subspace if these columns are linearly independent, and this is generally the case if the vectors z are sufficiently sparse. The average rank over all subspaces, however, will be controlled by the regularization term $\beta \geq 0$ which, similarly to $\alpha \geq 0$, needs to be set using cross-validation experiments. In this disclosure, the term $U(D, \beta)$ (or $U$ for conciseness) is used to denote the union of subspaces from which the described classifier is learned.

A positive consequence of the simplicity of the model in (10) is that the US-SVM objective in (11) inherits the convexity of the SVM objective in (2). Concerning the first two terms inside the summation of equations (11), the transformation $w = Dz$ is linear in $z$ and hence $z$ appears in (11) in the same form as $w$ appears in (2). Therefore, the first two terms are convex in $z$ for losses such as the hinge loss for which (2) is convex in $w$. The $\ell_1$ penalty in the third term in equations (11) is always convex and, since additions of convex functions are convex, the problem is itself convex.

Two special cases are worth mentioning in relation to (11). The first case is when $\beta = 0$, which effectively removes the sparsity constraint from the classifier. Assuming that the given $D$ is full rank, it can be observed that $\mathcal{U} = \mathbb{R}^A$. If $D$ is further a square matrix, then:

$$\hat{z} = D^{-1}\hat{w} \qquad (12a)$$

where $\hat{w}$ and $\hat{z}$ are the optimal solutions, respectively, to (2) and (11).

If $D$ is, instead, over-complete and full rank, there will be an infinite number of solutions z each satisfying the under-determined system:

$$\hat{w} = D\hat{z} \qquad (12b)$$

Hence, given the convexity of the problem, in the case when $\beta = 0$, one can expect to retrieve a solution $\hat{z}$ equivalent to $\hat{w}$ as long as $D \in \mathbb{R}^{d \times A}$ is full-rank with $A \geq d$.

A second special case is when $\alpha$ is set to zero. In this situation, the penalty that forces the $\ell_2$ norm of the classifier to be small is being removed, and this is the mechanism that ensures that the margin of SVM classifiers is large. Hence, this case needs special attention if one is to produce classifiers that generalize well.

In order to gain some insight concerning the margin when $\alpha = 0$, one may observe the following inequality:

$$\| w \|_2 = \| Dz \|_2 \leq \| D \|_2 \| z \|_2 \qquad (13)$$

Furthermore, for a positive constant chosen to be

$$\mu = \max_{x \neq 0}(\| x \|_2 / \| x \|_1) \qquad (14)$$

one can write $\| x \|_2 \leq \mu \| x \|_1, \forall x$. Hence:

$$\| Dz \|_2 \leq \mu \| D \|_2 \| z \|_1 \qquad (15)$$

If $\beta$ is chosen to satisfy $\beta = \frac{\mu \| D \|_2}{\lambda / 2}$, then the following can be established:

$$\frac{\lambda}{2} \| Dz \|_2 \leq \beta \| z \|_1 \qquad (16)$$

Hence, when setting $\alpha = 0$ in (11), the $\ell_1$ penalty term can be interpreted as an upper bound on an implicit $\ell_2$ penalty, $\frac{\lambda}{2} \| Dz \|_2$, and can thus be expected to have the desired effect on the margin of the classifier. The resulting US-SVM-$\ell_1$ formulation will further enjoy several interesting complexity advantages related to the removal of the term $\alpha \| Dz \|_2^2$.

Another important issue to consider is the presence of different classes of images in the training dataset. To this end, a set of training feature vectors $x_i$ and labels $y_{ik} \in \{-1,1\}$ indicating the membership (when $y_{ik} = 1$) or absence ($y_{ik} = -1$) of feature vector $i = 1, ..., M$ in class $k = 1,..., K$ are assumed.

According to two additional embodiments of the present disclosure, given the above training set, one can learn a dictionary by minimizing, over all K classes and all $M$ images in the training set, the US-SVM objective function in (11)

as follows:

$$\operatorname*{argmin}_{z_1,\dots,z_k} \frac{1}{M}\frac{1}{K}\sum_{i=1}^{M}\sum_{k=1}^{K}\left(\ell(z_k, x_i, y_{ik}) + \frac{\alpha}{2}\parallel Dz_k \parallel_2^2 + \beta \parallel z_k \parallel_1\right) \quad (17a)$$

$$\operatorname*{argmin}_{D,z_1,\dots,z_k} \frac{1}{M}\frac{1}{K}\sum_{i=1}^{M}\sum_{k=1}^{K}\left(\ell(z_k, x_i, y_{ik}) + \frac{\alpha}{2}\parallel Dz_k \parallel_2^2 + \beta \parallel z_k \parallel_1\right) \quad (17b)$$

where $y_i$ are labels, $\ell(.)$ is a classifier loss function, $\alpha$ is a regularization parameter for the $\ell_2$ norm regularization term on the classifier weight, $\beta$ is a regularization parameter for the $\ell_1$ norm regularization term on the sparse weight vector and the function under minimization is the objective function $J(w) = \frac{1}{M}\frac{1}{K}\sum_{i=1}^{M}\sum_{k=1}^{K}\left(\ell(z_k, x_i, y_{ik}) + \frac{\alpha}{2}\parallel Dz_k \parallel_2^2 + \beta \parallel z_k \parallel_1\right)$. The two embodiments in equations (17a) and (17b) differ only in the optimization of the dictionary matrix $D$, as in (11a) and (11b).

As in equations (11), an alternative to the $\ell_1$ norm regularization on the sparse weight vector may be a direct $\ell_0$ norm constraint on the individual sparse weights, *e.g.,* $|z_j| < \delta$, for $1 \le j \le A$, where $z = [z_1, z_2, ..., z_A]^T$ is the sparse weight vector and $\delta$ is a scalar.

In addition, as in (11), the initial value of the sparse weight vector $z$ in (17) may be randomly generated. The dictionary matrix $D$ in (17a) or initial value of $D$ in (17b) may also be randomly generated. Other possibilities for obtaining $D$ may include using data vectors $x_i$ as columns of $D$, or learned classifiers as columns of $D$ (*e.g.,* $\ell_2$-SVM classifier). An $\ell_2$-SVM classifier is learned according to (3), where the $\ell_2$ qualifier refers to the regularization square term. Multiple such classifiers (the $w$ vectors) can be separately learned and used as columns of the matrix $D$. Other linear classifiers can also be used (*e.g.,* $\ell_1$-SVM classifier).

Following the same argument as for the problem in (11), one can show that (17) is convex in $z$ or in $D$. However, given the fourth-order nature of the second term inside the summation, the problem is not jointly convex in $z$ and $D$. Even for the special case where $\alpha = 0$ and this fourth order term disappears, the problem is not convex for common loss functions such as the hinge loss due to a subtraction of a second order term involving the product $Dz$.

According to a further embodiment of the present disclosure, $D$ and $z$ are learned on a first dataset (e.g., ImageNet, an image database organized according to the WordNet hierarchy), using (11b) or (17b), and z is discarded. Given a new class (or classes) from a second dataset (e.g., one's personal images), the dictionary matrix $D$ is fixed and only the sparse weight vector z for the new class (classes) is (are) learned, using (17a). The benefit of this approach is that the notion of human visual understanding implicit in the first dataset (with lots of annotations) is transferred to the smaller dataset. The loss in classification performance resulting from the reduced number of training images over the second dataset is mitigated by the knowledge implicit in $D$. The dictionary matrix $D$ can be said to encode "visual attributes", although these might not be interpretable by a human.

One may observe that, given the optimal $D$ and $z$, and the corresponding classifier w = $Dz$, and an arbitrary scalar c, a new dictionary $D' = cD$ and sparse vectors $z' = \frac{1}{c}z$ will likewise satisfy $w = Dz = D'z'$. This ambiguity further allows the optimization to make the $\ell_1$ norm regularization term on z' arbitrarily small for a very large c. Hence, in yet another further embodiment of the present disclosure, applicable to equations (11) and (17), in order to remove problems related to this ambiguity, one may constrain the maximum norm of the columns of $D$ to be smaller than some scalar $\varepsilon$. Letting $D_j$ denote column $j$ of matrix $D$, this constraint takes the form: $\|D_j\|_2 < \varepsilon$, for $1 \le j \le A$ and can be added to the minimizations in (11) and (17).

According to one additional embodiment of the present disclosure, the columns $D_j$ of the dictionary $D$ learned as per (17) can be used as linear classifiers for an implicit category. These categories might correspond to attributes such as "day" or "night" that can be associated to multiple classes (such as "building" or "street"). The attributes encoded in $D_j$ are a consequence of the dataset and determined by the learning routine or method.

A given image class can be deemed to be composed of multiple modalities or subclasses. For example the class "buildings" can be deemed to contain the modalities "buildings at night" and "buildings at daytime". Given that US-SVM utilizes classifiers $w$ with the form $w = Dz = \sum_{j=1}^{A} D_j z_j$, and given that the $D_j$ may each correspond to an attribute, according to the present disclosure, one may use US-SVM classifiers to group images into modalities of each class. One way to do this grouping is to first rank a database of images with features $x_i$ using $w^T x_i$ where $w$ is a US-SVM classifier. The ranked images are then split into $A$ ranked lists that keep the same relative ordering, with image $i$

assigned to the list for which $\underset{i}{\operatorname{argmax}} \left(z_i \boldsymbol{D}_i^T x_i\right)$. This type of ranking with grouping may be used to display images to the user and hence be a detectability tool.

According to the present disclosure, both solutions (11) and (17) can be solved using Stochastic Gradient Descent (SGD) as it is very efficient in data-laden situations. SGD can be used to solve problems of the form:

$$g(\boldsymbol{\theta}; \boldsymbol{X}) = \frac{1}{M} \sum_{i=1}^{M} \Phi\left(\boldsymbol{\theta}; x_i\right) \qquad (18)$$

where $\theta$ denotes the parameters that are being learned.

At iteration $t$, SGD draws a random training feature $\boldsymbol{x}_{i_t}$ and updates the parameters $\theta$ using:

$$\boldsymbol{\theta}^t = \boldsymbol{\theta}^{t-1} - \gamma_t \nabla_{\boldsymbol{\theta}} \Phi(\boldsymbol{\theta}^{t-1}; \boldsymbol{x}_{i_t}) \qquad (19)$$

The learning rate $\gamma_t$ can be set using cross-validation, but SGD is guaranteed to converge even with constant learning rate $\gamma_t = \gamma$ if $\gamma$ is sufficiently small.

For the case when the number of parameters is too large, one can use a Block-Coordinate SGD (BC-SGD) variant. Letting $\theta = (\theta_1, ..., \theta_B)$, BC-SGD consists of updating the subset of parameters in only one of the blocks $\theta_{b_t}$ at any given iteration $t$ when applying (19).

For completeness, one may observe that, when solving the US-SVM problem in (11), $\theta = z$ and the following equality is used:

$$\Phi_1(\boldsymbol{z}; x_i, y_i) = \ell(\boldsymbol{z}, x_i, y_i) + \frac{\alpha}{2} \parallel \boldsymbol{D}\boldsymbol{z} \parallel_2^2 + \beta \parallel \boldsymbol{z} \parallel_1 \qquad (20)$$

Accordingly, the gradient required in (19) is given by:

$$\nabla_{\boldsymbol{z}} \Phi_1(\boldsymbol{z}; x, y) = \begin{cases} -y\boldsymbol{D}^T x + \alpha(\boldsymbol{D}^T \boldsymbol{D})\boldsymbol{z} + \beta \operatorname{sign}(\boldsymbol{z}), & \text{if } y(\boldsymbol{D}\boldsymbol{z})^T x < 1 \\ \alpha(\boldsymbol{D}^T \boldsymbol{D})\boldsymbol{z} + \beta \operatorname{sign}(\boldsymbol{z}), & \text{otherwise} \end{cases} \qquad (21)$$

When solving (17), $\theta = (\boldsymbol{D}, \boldsymbol{z}_1, ..., \boldsymbol{z}_K)$ and the following equality is used:

$$\Phi_2((\boldsymbol{D}, \boldsymbol{z}_1, ..., \boldsymbol{z}_K); x_i, y_i) = \sum_{k=1}^{K} \left( \ell(\boldsymbol{z}_k, x_i, y_{ik}) + \frac{\alpha}{2} \parallel \boldsymbol{D}\boldsymbol{z}_k \parallel_2^2 + \beta \parallel \boldsymbol{z}_k \parallel_1 \right) \qquad (22)$$

The gradient required in (19) can be assembled from the partial gradients below, where one uses $\Phi_1$ from (20):

$$\nabla_{\boldsymbol{D}} \Phi_2\left((\boldsymbol{D}, \boldsymbol{z}_1, ..., \boldsymbol{z}_K); \boldsymbol{y}_i\right) = - \sum_{k \in \{m: y_{ik}(\boldsymbol{D}\boldsymbol{z}_m)^T x_i < 1\}} y_{ik}\, x_i \boldsymbol{z}_k^T$$
$$+ \alpha \sum_{k=1}^{K} \boldsymbol{D}\left(\boldsymbol{z}_k \boldsymbol{z}_k^T\right) \qquad (23)$$

$$\nabla_{\boldsymbol{z}_k} \Phi_2((\boldsymbol{D}, \boldsymbol{z}_1, ..., \boldsymbol{z}_K); \boldsymbol{x}_i, \boldsymbol{y}_i) = \nabla_{\boldsymbol{z}} \Phi_1(\boldsymbol{z}; \boldsymbol{x}_i, y_{ik})\big|_{\boldsymbol{z}=\boldsymbol{z}_k}, \quad k = 1, ..., K \qquad (24)$$

Other choices for $\Phi(\theta; \boldsymbol{x}_i)$ are possible for this second problem, and using BC-SGD can reduce the complexity of the learning process.

According to the present disclosure, to ensure the sparsity of the sparse weight vector $\boldsymbol{z}$ regardless of the number of iterations, several techniques can be used. One technique is to replace $\boldsymbol{z}$ with $\boldsymbol{u}$ - $\boldsymbol{v}$ where both $\boldsymbol{u}$ and $\boldsymbol{v}$ are sparse vectors with only positive non-zero elements. The optimization process will be slower since two variables need to be updated at each iteration. The second option can be hard thresholding the element or component values of $z$ so that all the entries $z_j$, $1 \leq j \leq A$ satisfying $\dfrac{|z_j|}{\|z\|_1} \leq \mathcal{T}$ are set to zero. Cross-validation may be performed to find an optimal threshold. A third possible option is to impose a hard constraint on the number of non-zero elements such that the elements with the highest values are kept. This option suffers from the drawback that all z vectors have the same sparsity, which may not be an optimal solution (likewise, all subspaces have the same rank). A fourth option consists in plotting the histogram of the element values and then thresholding at the value where the histogram has a sharp decrease. Compared to the hard-thresholding mentioned previously, it takes into account the distribution of the element values.

The formulation described in (11) (and (17) by extension) offers a number of advantages. A first advantage is that of training or learning efficiency, *i.e.,* solving the US-SVM problem (11) using SGD has potentially lower complexity than solving the standard SVM problem in (2). This is a consequence of the sparsity of the vector z, as operations involving sparse vectors can be implemented efficiently. Situations involving large, fixed negative sets may benefit particularly from the US-SVM formulation, as the computation of $Dx_i$ for all vectors $i$ can be done once for all learning runs.

A second advantage is that of test-time efficiency. When applying the learned classifier $w = Dz$ to a large database of features $X = [x_1, \dots, x_N]$, the following can be observed:

$$w^T X = (Dz)^T X = z^T (D^T X) \qquad (25)$$

Given that the term $D^T X$ is constant regardless of the classifier, the term can be pre-computed resulting in a simple sparse vector-matrix product at test time.

A third important advantage of the described approach is the knowledge transfer between classes. The dictionary matrix is learned from multiple classes. The resulting dictionary hence encodes generic knowledge about human vision. When learning a new class, it will hence benefit indirectly from this generic information to produce better classifiers.

A fourth advantage is that of classifier storage efficiency. For situations where a large number of classifiers need to be pre-computed and applied to ever-changing sets of images, storing classifiers in a compact representation that is further functional (*i.e.,* it can be applied as such to a feature vector) is a big plus. The approach of the present disclosure indeed provides such a compact, functional representation in the form of the sparse vector $z$.

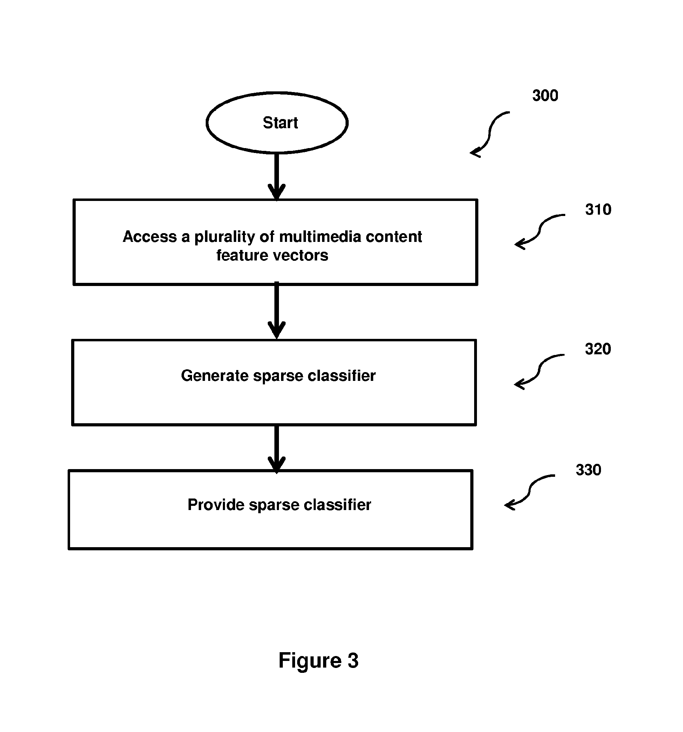

Figure 3 illustrates a flowchart 300 of an exemplary method of generating a sparse classifier for classifying multimedia content according to the present disclosure. The method includes, at step 310, accessing a plurality of multimedia content feature vectors for a plurality of multimedia content items. Next, at step 320, the method includes generating a sparse classifier by training classifier weights with the multimedia content feature vectors, the classifier weights being a function of a dictionary matrix and sparse weights. Finally, at step 330, the method includes providing the trained classifier weights, including a trained dictionary matrix and trained sparse weights, as the sparse classifier. The function can be a linear or nonlinear function.

According to one embodiment of the method, the function is a matrix product of the dictionary matrix and the sparse weights.

According to one embodiment of the method, the generating step includes determining trained sparse weights that decrease a value of an objective function of the sparse weights and the dictionary matrix with respect to a first value of the objective function, the objective function including a $\ell_1$ norm regularization term on the sparse weights.

According to one embodiment of the method, the generating step includes determining trained sparse weights and a trained dictionary matrix that decrease a value of an objective function of the sparse weights and the dictionary matrix with respect to a first value of the objective function, the objective function including a $\ell_1$ norm regularization term on the sparse weights.

According to one embodiment of the method, the objective function further includes a constraint on the columns of the dictionary matrix.

According to one embodiment of the method, the objective function further includes a loss function on the sparse weights and the feature vectors, and a $\ell_2$ norm regularization term on the sparse weights and the dictionary matrix.

According to one embodiment of the method, the determining step includes a minimization of the objective function.

According to one embodiment of the method, the minimization is according to one of equations (11a), (11b), (17a) and (17b).

According to one embodiment of the method, the generating step includes training the classifier weights over all classes of the multimedia content items, wherein each class has corresponding sparse weights.

According to one embodiment of the method, the generating step includes using stochastic gradient descent to generate the sparse classifier.

According to one embodiment of the method, a sparsity constraint sets to zero sparse weights below a threshold.

According to one embodiment of the method, the threshold is a function of the distribution of the components of the sparse weights.

According to one embodiment of the method, the method further includes discarding the trained sparse weights, accessing a second plurality of multimedia content feature vectors for a second plurality of multimedia content items, generating a second sparse classifier by training a second set of classifier weights with the second plurality of multimedia content feature vectors, the second set of classifier weights being a second function of the trained dictionary matrix and a second set of sparse weights, and providing the trained second set of classifier weights, including the trained dictionary matrix and a trained second set of sparse weights, as a second sparse classifier.

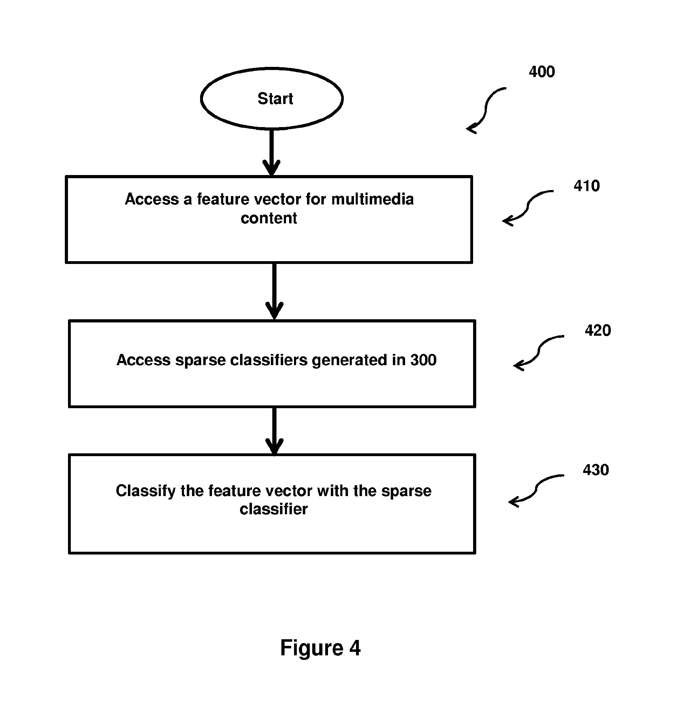

Figure 4 illustrates a flowchart 400 of an exemplary method of multimedia content classification according to the present disclosure. The method includes, at step 410, accessing a feature vector for a multimedia content item. Next, at step 420, the method includes accessing a sparse classifier generated according to any of the embodiments of the method generating a sparse classifier (flowchart 300). Finally, at step 430, the method includes classifying the feature vector according to the sparse classifier to obtain the multimedia content classification. The sparse classifier can be the second sparse classifier.

According to one embodiment of the method, the classifying step includes transforming the feature vector with the trained dictionary matrix, and classifying the transformed feature vector according to the trained sparse weights.

According to one embodiment of the method, the classifying step includes transforming an original feature vector to obtain said feature vector and classifying the transformed feature vector according to the trained sparse weights.

According to one embodiment of the method, the classifying step includes classifying the feature vector according to classifier weights which are a matrix product of the trained dictionary matrix and of the trained sparse weights.

In the present disclosure, the step of accessing associated with flowcharts 300 and 400 may imply accessing or retrieving pre-computed values, or computing and then accessing the computed values. The step of providing associated with flowchart 300 may imply outputting the sparse classifier or storing the sparse classifier in memory for later access or retrieval.

It is to be understood that the present disclosure may be implemented in various forms of hardware, software, firmware, special purpose processors, or a combination thereof. The present disclosure may be implemented as a combination of hardware and software. Moreover, the software may be implemented as an application program tangibly embodied on a program storage device. The application program may be uploaded to, and executed by, a machine comprising any suitable architecture. The machine may implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof), which is executed via the operating system. In addition, various other peripheral devices may be connected to the computer platform such as an additional data storage device and a printing device.

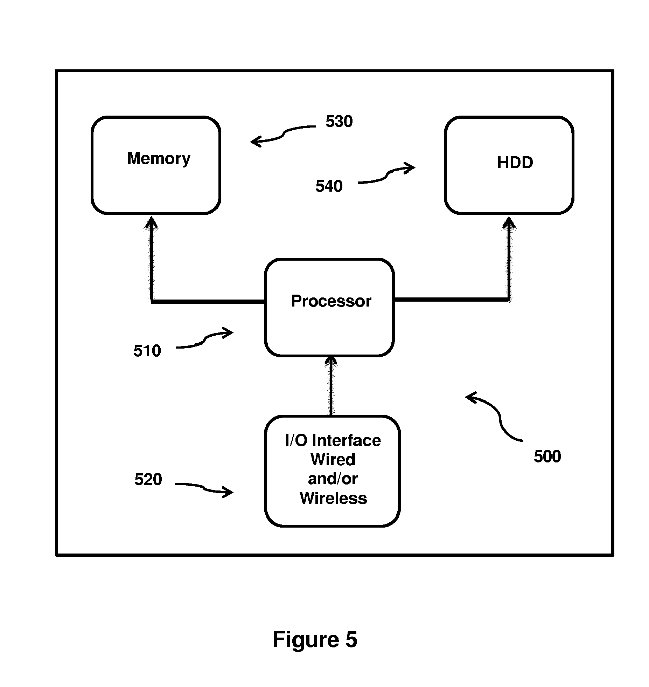

Figure 5 illustrates a block diagram of an exemplary computing environment 500 within which any of the methods of the present disclosure can be implemented and executed. The computing environment 500 includes a processor 510, and at least one (and preferably more than one) I/O interface 520. The I/O interface 520 can be wired or wireless and, in the wireless implementation is pre-configured with the appropriate wireless communication protocols to allow the computing environment 500 to operate on a global network (e.g., internet) and communicate with other computers or servers (e.g., cloud based computing or storage servers) so as to enable the present disclosure to be provided, for example, as a Software as a Service (SAAS) feature remotely provided to end users. One or more memories 530 and/or storage devices (Hard Disk Drive, HDD) 540 are also provided within the computing environment 500. The computing environment may be used to implement a node or device, and/or a controller or server that operates the storage system. The computing environment may be, but is not limited to, desktop computers, cellular phones, smart phones, phone watches, tablet computers, personal digital assistant (PDA), netbooks, laptop computers, set-top boxes or general multimedia content receiver and/or transmitter devices.

Furthermore, aspects of the present disclosure can take the form of a computer-readable storage medium. Any combination of one or more computer-readable storage medium(s) may be utilized. A computer-readable storage medium can take the form of a computer-readable program product embodied in one or more computer-readable medium(s) and having computer-readable program code embodied thereon that is executable by a computer. A computer-readable storage medium as used herein is considered a non-transitory storage medium given the inherent capability to store the information therein as well as the inherent capability to provide retrieval of the information therefrom. A computer-readable storage medium may be, for example, but is not limited to, an electronic, magnetic, optical, electromagnetic, infrared, or semiconductor system, apparatus, or device, or any suitable combination of the foregoing.

It is to be appreciated that the following list, while providing more specific examples of computer-readable storage mediums to which the present disclosure may be applied, is merely an illustrative and not exhaustive listing as is readily appreciated by one of ordinary skill in the art. The list of examples includes a portable computer diskette, a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

According to one aspect of the present disclosure, a method of generating a sparse classifier for classifying multimedia content is provided, the method including accessing a plurality of multimedia content feature vectors for a plurality of multimedia content items, generating a sparse classifier by training classifier weights with the multimedia content feature vectors, the classifier weights being a function of a dictionary matrix and sparse weights, and providing the trained classifier weights, including a trained dictionary matrix and trained sparse weights, as the sparse classifier.

According to one embodiment of the method, the function is a matrix product of the dictionary matrix and the sparse weights.

According to one embodiment of the method, the generating includes determining trained sparse weights that decrease a value of an objective function of the sparse weights and the dictionary matrix with respect to a first value of the objective function, the objective function including a $\ell_1$ norm regularization term on the sparse weights.

According to one embodiment of the method, the generating includes determining trained sparse weights and a trained dictionary matrix that decrease a value of an objective function of the sparse weights and the dictionary matrix with respect to a first value of the objective function, the objective function including a $\ell_1$ norm regularization term on the sparse weights.

According to one embodiment of the method, the objective function further includes a constraint on the columns of the dictionary matrix.

According to one embodiment of the method, the objective function further includes a loss function on the sparse weights and the feature vectors, and a $\ell_2$ norm regularization term on the sparse weights and the dictionary matrix.

According to one embodiment of the method, the determining includes a minimization of the objective function.

According to one embodiment of the method, the minimization is according to one of equations (11a), (11b), (17a) and (17b).

According to one embodiment of the method, the generating includes training the classifier weights over all classes of the multimedia content items, wherein each class has corresponding sparse weights.

According to one embodiment of the method, the generating includes using stochastic gradient descent to generate the sparse classifier.

According to one embodiment of the method, a sparsity constraint sets to zero sparse weights below a threshold.

According to one embodiment of the method, the threshold is a function of the distribution of the components of the sparse weights.

According to one aspect of the present disclosure, an apparatus for generating a sparse classifier for classifying multimedia content is provided, the apparatus including a processor in communication with at least one input/output interface and at least one memory in communication with the processor, the processor being configured to perform any of the embodiments of the method of generating a sparse classifier for classifying multimedia content.

According to one aspect of the present disclosure, a computer-readable storage medium carrying a software program is described including program code instructions for performing any of the embodiments of the method of generating a sparse classifier for classifying multimedia content.

According to one aspect of the present disclosure, a non-transitory computer-readable program product is described including program code instructions for performing any of the embodiments of the method of generating a sparse classifier for classifying multimedia content when the program is executed by a computer.

According to one aspect of the present disclosure, a method of multimedia content classification is provided, the method including accessing a feature vector for a multimedia content item, accessing a sparse classifier generated according to any of the embodiments of the method generating a sparse classifier, and classifying the feature vector according to the sparse classifier to obtain the multimedia content classification.

According to one embodiment of the method, the classifying includes transforming the feature vector with the trained dictionary matrix, and classifying the transformed feature vector according to the trained sparse weights.

According to one embodiment of the method, the classifying includes transforming an original feature vector to obtain the feature vector and classifying the feature vector according to the trained sparse weights.

According to one embodiment of the method, the classifying includes classifying the feature vector according to classifier weights which are a matrix product of the trained dictionary matrix and of the trained sparse weights.

According to one aspect of the present disclosure, an apparatus for multimedia content classification is provided, the apparatus including a processor in communication with at least one input/output interface; and at least one memory in communication with the processor, the processor being configured to perform any of the embodiments of the method of multimedia content classification.

According to one aspect of the present disclosure, a computer-readable storage medium carrying a software program is described including program code instructions for performing any of the embodiments of the method of multimedia content classification.

According to one aspect of the present disclosure, a non-transitory computer-readable program product is described including program code instructions for performing any of the embodiments of the method of multimedia content classification when the program is executed by a computer.

It is to be further understood that, because some of the constituent system components and methods depicted in the accompanying drawings are preferably implemented in software, the actual connections between the system components or the process function blocks may differ depending upon the manner in which the present disclosure is programmed. Given the teachings herein, one of ordinary skill in the pertinent art will be able to contemplate these and similar implementations or configurations of the present disclosure.

Although the illustrative embodiments have been described herein with reference to the accompanying drawings, it is to be understood that the present disclosure is not limited to those precise embodiments, and that various changes and modifications may be effected therein by one of ordinary skill in the pertinent art without departing from the scope of the present disclosure. All such changes and modifications are intended to be included within the scope of the present disclosure as set forth in the appended claims.

**Claims**

1. A method of generating a sparse classifier for classifying multimedia content comprising:

   accessing (310) a plurality of multimedia content feature vectors for a plurality of multimedia content items;
   generating (320) a sparse classifier by training classifier weights with said multimedia content feature vectors, said classifier weights being a function of a dictionary matrix and sparse weights; and
   providing (330) said trained classifier weights, including a trained dictionary matrix and trained sparse weights, as said sparse classifier.

2. The method of claim 1 wherein said function is a matrix product of the dictionary matrix and the sparse weights.

3. The method of claims 1 or 2 wherein generating said sparse classifier comprises:

   determining trained sparse weights that decrease a value of an objective function of said sparse weights and said dictionary matrix with respect to a first value of said objective function, said objective function including a $\ell_1$ norm regularization term on said sparse weights.

4. The method of claims 1 or 2 wherein generating said sparse classifier comprises:

   determining trained sparse weights and a trained dictionary matrix that decrease a value of an objective function of said sparse weights and said dictionary matrix with respect to a first value of said objective function, said objective function including a $\ell_1$ norm regularization term on said sparse weights.

5. The method of any of the claims 3 or 4 wherein said objective function further includes a constraint on the columns of said dictionary matrix.

6. The method of any of claims 3 to 5 wherein said determining comprises a minimization of said objective function.

7. The method of any of claims 1 to 6 wherein said generating comprises:

   training the classifier weights over all classes of the multimedia content items, wherein each class has corresponding sparse weights.

8. The method of any of the claims 1 to 7 wherein said generating further comprises:

   using stochastic gradient descent o generate the sparse classifier.

9. A method of multimedia content classification comprising:

   accessing (410) a feature vector for a multimedia content item;
   accessing (420) a sparse classifier generated according to the method of any of the claims 1 to 8; and
   classifying (430) said feature vector according to said sparse classifier to obtain said multimedia content classification.

**10.** The method of claim 9 wherein said classifying comprises:

transforming said feature vector with the trained dictionary matrix; and
classifying said transformed feature vector according to the trained sparse weights.

**11.** The method of claim 9 wherein said classifying comprises:

transforming an original feature vector to obtain said feature vector; and
classifying said transformed feature vector according to the trained sparse weights.

**12.** The method of claim 9 wherein said classifying comprises:

classifying said feature vector according to classifier weights which are a matrix product of the trained dictionary matrix and of the trained sparse weights.

**13.** An apparatus (500) comprising a processor (510) in communication with at least one input/output interface (520); and at least one memory (530, 540) in communication with said processor, said processor being configured to perform any of the methods of claims 1 to 8 and 9 to 12.

**14.** A computer-readable storage medium carrying a software program comprising program code instructions for performing the method according to any of the claims 1 to 8 and 9 to 12.

**15.** A non-transitory computer-readable program product comprising program code instructions for performing the method according to any of the claims 1 to 8 and 9 to 12 when the program is executed by a computer.

**Figure 1**

Figure 2

300

Start

Access a plurality of multimedia content
feature vectors

310

Generate sparse classifier

320

Provide sparse classifier

330

# Figure 3

400

Start

Access a feature vector for multimedia content

410

Access sparse classifiers generated in 300

420

Classify the feature vector with the sparse classifier

430

Figure 4

530

Memory

540

HDD

Processor

510

I/O Interface
Wired
and/or
Wireless

520

500

# Figure 5

Europäisches
Patentamt

European
Patent Office

Office européen
des brevets

# EUROPEAN SEARCH REPORT

Application Number

EP 15 30 6762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | M W Spratling: "Classification using sparse representations: a biologically plausible approach", Biological Cybernetics, 1 January 2014 (2014-01-01), pages 61-73, XP055279854, Retrieved from the Internet: URL:http://www.inf.kcl.ac.uk/staff/mike/Doc/sparse_classification.pdf [retrieved on 2016-06-13] * page 1, paragraph 2 * * sections 2.1, 2-4, 2.5 * ----- | 1-15 | INV. G06F17/30 |
| X | JIANCHAO YANG ET AL: "Learning the sparse representation for classification", MULTIMEDIA AND EXPO (ICME), 2011 IEEE INTERNATIONAL CONFERENCE ON, IEEE, 11 July 2011 (2011-07-11), pages 1-6, XP031964761, DOI: 10.1109/ICME.2011.6012083 ISBN: 978-1-61284-348-3 * sections, 3.2 2.1, 2.2; page 1, right-hand column, last paragraph - page 2, left-hand column, paragraph 1 * ----- | 1-15 | |
| X | YANG MENG ET AL: "Latent Dictionary Learning for Sparse Representation Based Classification", 2014 IEEE CONFERENCE ON COMPUTER VISION AND PATTERN RECOGNITION, IEEE, 23 June 2014 (2014-06-23), pages 4138-4145, XP032649306, DOI: 10.1109/CVPR.2014.527 [retrieved on 2014-09-24] * page 1, left-hand column, paragraph 1 - page 2, left-hand column, last paragraph * ----- -/-- | 1-15 | |

TECHNICAL FIELDS
SEARCHED        (IPC)

G06F

The present search report has been drawn up for all claims

| Place of search | Date of completion of the search | Examiner |
|---|---|---|
| The Hague | 14 June 2016 | Correia Martins, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 15 30 6762

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIPING WANG ET AL: "Image Classification Algorithm Based on Sparse Coding", JOURNAL OF MULTIMEDIA, vol. 9, no. 1, 1 January 2014 (2014-01-01), XP055279696, Finland ISSN: 1796-2048, DOI: 10.4304/jmm.9.1.114-122 * page 117, left-hand column, paragraph 2 - page 118, right-hand column, last paragraph * | 1-15 | |
| X | CN 104 298 997 A (BEIJING XIAOMI TECHNOLOGY CO) 21 January 2015 (2015-01-21) * abstract * | 1-15 | |
| X | CN 104 794 498 A (UNIV XIDIAN) 22 July 2015 (2015-07-22) * abstract * | 1-15 | |

TECHNICAL FIELDS
SEARCHED (IPC)

The present search report has been drawn up for all claims

| Place of search | Date of completion of the search | Examiner |
|---|---|---|
| The Hague | 14 June 2016 | Correia Martins, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 3 166 020 A1

### ANNEX TO THE EUROPEAN SEARCH REPORT
### ON EUROPEAN PATENT APPLICATION NO.

EP 15 30 6762

This annex lists the patent family members relating to the patent documents cited in the above-mentioned European search report.
The members are as contained in the European Patent Office EDP file on
The European Patent Office is in no way liable for these particulars which are merely given for the purpose of information.

14-06-2016

| Patent document cited in search report | | Publication date | Patent family member(s) | Publication date |
|---|---|---|---|---|
| CN 104298997 | A | 21-01-2015 | NONE | |
| CN 104794498 | A | 22-07-2015 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Z. JIANG et al.** Learning a Discriminative Dictionary for Sparse Coding via Label Consistent K-SVD. *IEEE Conference on Computer Vision and Pattern Recognition,* 2011